# EUROPEAN PATENT APPLICATION

(11) **EP 3 279 607 A1**
(43) Date of publication of application: **07.02.2018**
(21) Application number: 17184935.9
(22) Date of filing: 04.08.2017
(51) Int. Cl.: G01B 15/06, G01N 23/04

(54) **EMBEDDED STRAIN SENSOR NETWORK**

(30) Priority: 05.08.2016 US 201615229199
(71) Applicant: General Electric Company, Schenectady, NY 12345 (US)
(72) Inventor: DEHGHAN NIRI, Ehsan, Schenectady, NY 12345 (US); RANSON, William F., Greenville, SC 29615 (US); MC CONNELL, Eric Eicher, Greenville, SC 29615 (US); BREZNAK, Jeffrey Michael, Schenectady, NY 12345 (US)
(74) Representative: Foster, Christopher Michael

(57) **Abstract**

A component (10), a method (200) of making a component (10) and a method (100) of monitoring strain. The component (10) has an array of internal nodes (40) with a radiopacity distinct from the predominant radiopacity of the component (10). Displacement of the nodes (40) can be measured and used to calculate strain on the component (10).

## Description

### FIELD OF THE INVENTION

The present subject matter relates generally to systems and methods for monitoring and measuring component strain, and more particularly to systems and methods which provide full local and global strain capture of all strain components.

### BACKGROUND OF THE INVENTION

Throughout various applications, components are subjected to numerous extreme conditions (e.g., high temperatures, high pressures, large stress loads, etc.). In such applications, an apparatus's individual components may suffer creep and/or deformation over time that may reduce the component's usable life. Such concerns might apply, for instance, to some turbomachines, such as gas turbine systems. During operation of a turbomachine, various components (collectively known as turbine components) within the turbomachine and particularly within the turbine section of the turbomachine, such as turbine blades, may be subject to creep due to high temperatures and stresses. For turbine blades, creep may cause portions of or the entire blade to elongate so that the blade tips contact a stationary structure, for example a turbine casing, and potentially cause unwanted vibrations and/or reduced performance during operation.

Accordingly, components such as turbine components may be monitored for creep. One approach to measure and monitor components for creep is to configure strain sensors with a plurality of nodes on or embedded in the surface of the components, and analyze the nodes of the strain sensors at various intervals to monitor for deformations associated with creep strain. Such sensors only measure strain in and along the two-dimensional surface. Further, such sensors, and in particular the nodes thereof are exposed to the operating environment of the component.

### BRIEF DESCRIPTION OF THE INVENTION

Additional aspects and advantages of the invention will be set forth in part in the following description, or may be apparent from the description, or may be learned through practice of the invention.

In a first exemplary embodiment, a component for a gas turbine is provided. The component includes an outer surface, an interior volume, the interior volume comprising a first material having a first radiopacity, a plurality of nodes embedded within the interior volume and spaced from the outer surface, the plurality of nodes defining a three-dimensional array, each of the plurality of nodes comprising a second material having a second radiopacity. The second radiopacity is different from the first radiopacity.

In a second exemplary embodiment, a method of making a turbine component having an interior volume is provided. The method includes forming the interior volume using a first material having a first radiopacity and forming a three-dimensional array of nodes within the interior volume, each node of the three-dimensional array comprising a second material having a second radiopacity, wherein the second radiopacity is different from the first radiopacity.

In a third exemplary embodiment, a method of monitoring strain in a component is provided. The method includes determining a first location of a plurality of internal nodes within the component based on the radiopacity of the nodes, recording the first location of the nodes, subjecting the component to at least one duty cycle, determining a second location of the plurality of nodes after the at least one duty cycle, comparing the second location of the plurality of nodes to the first location of the plurality of nodes, calculating a displacement of the nodes from the first location to the second location, and calculating local strain on the component based on the displacement of the nodes.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 provides a perspective view of an exemplary component including an embedded strain sensor network comprising a plurality of nodes according to various embodiments of the present disclosure.
FIG. 2 provides a longitudinal section view of an exemplary component according to various embodiments of the present disclosure.
FIG. 3 provides a transverse section view of the exemplary component of FIG. 2.
FIG. 4 provides a longitudinal section view of another exemplary component according to various embodiments of the present disclosure.
FIG. 5 provides a transverse section view of still another exemplary component according to various embodiments of the present disclosure.
FIG. 6 is a flow chart illustrating a method according to various embodiments of the present disclosure.
FIG. 7 is a flow chart illustrating another method according to various embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

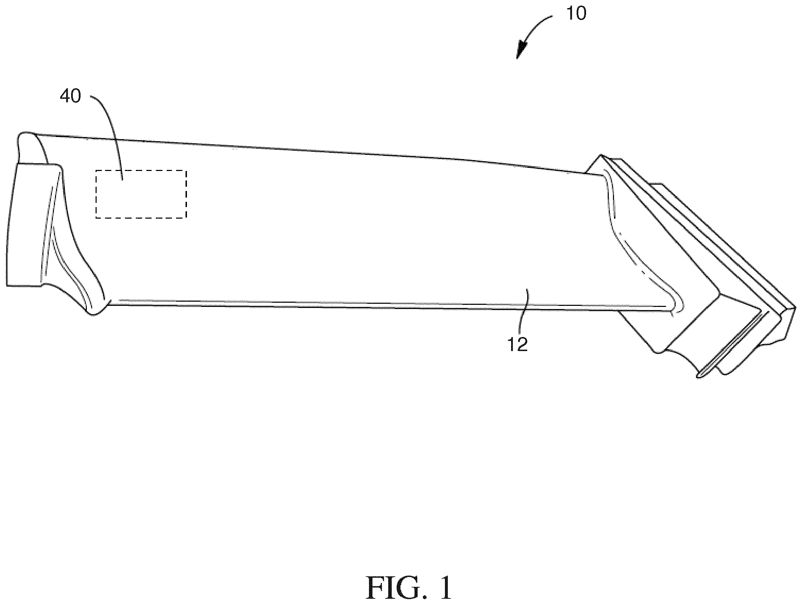

Referring now to FIGS. 1 through 5, various example components 10 are illustrated, each with a plurality of embedded nodes 40 configured therein. The component 10 can comprise a variety of types of components used in a variety of different applications, such as, for example, components utilized in high temperature applications. In some embodiments, the component 10 may comprise an industrial gas turbine or steam turbine component such as a combustion component or hot gas path component. In some embodiments, the component 10 may comprise a turbine blade, compressor blade, vane, nozzle, shroud, rotor, transition piece or casing. In other embodiments, the component 10 may comprise any other component of a turbine such as any other component for a gas turbine, steam turbine or the like. In some embodiments, the component may comprise a non-turbine component including, but not limited to, automotive components (e.g., cars, trucks, etc.), aerospace components (e.g., airplanes, helicopters, space shuttles, aluminum parts, etc.), locomotive or rail components (e.g., trains, train tracks, etc.), structural, infrastructure or civil engineering components (e.g., bridges, buildings, construction equipment, etc.), and/or power plant or chemical processing components (e.g., pipes used in high temperature applications).

As may be seen in the example embodiments illustrated by FIGS. 1 through 5, the component 10 has an exterior surface 12 beneath which nodes 40 may be configured, and further includes an interior volume 14 formed from a first material, which is the predominant material of the component 10. Exterior surface 12 generally comprises the outermost extent of component 10, and may be of the same material as the first material of interior volume 14 or may be a distinct material, e.g., an applied surface coating. A plurality of nodes 40 may be embedded within the interior volume 14. The nodes 40 may be formed from a second material that is different from the first material of the interior volume 14. In particular, the second material of the nodes 40 may differ from the first material of the interior volume 14 in radiographic properties, that is, any material property which can be readily detected by radiographic scans. As discussed herein, the nodes 40 form a strain sensor network and are advantageously utilized to measure the strain of the component 10.

The component 10 can take a variety of shapes, such as polygonal, curvilinear, tapered, prismatic, e.g., cylinder or rectangular prism, solid or hollow. The nodes 40 can be of any shape, regular or irregular, e.g., circular, oblong, ovoid, polygonal, elongate or other shapes. The nodes 40 define a three-dimensional array which can take a variety of forms, e.g., the nodes 40 may be positioned in a regularly-spaced grid or the nodes 40 may be positioned more or less arbitrarily and/or the relative locations of the nodes 40 may be constrained by, e.g., a minimum value for distance X between nodes 40 or a minimum value for distance Y from the outer surface 12 of the component 10 to any node 40. For example, the minimum value for distance X between nodes 40 can be selected based on the fracture mechanics of the predominant material (i.e., the first material of the interior volume 14) of the component 10 and in such embodiments the nodes 40 can be arrayed in a regular manner or the distance between adjacent nodes may vary so long as it is at least the minimum. Additionally, the characteristics of the second material of the nodes 40 may influence the determination of the minimum value for distance X between nodes 40.

In various embodiments, and in particular when the second material of the nodes 40 is less dense than the first material of the interior volume 14, and in particular where the nodes 40 are air-filled voids, nodes 40 that are too large, too numerous, and/or too close together can create a weak spot in the component 10 which may be considered a mechanical defect in the component 10. Thus, it is preferred to maintain at least minimum value for distances X between nodes 40 and at most maximum sizes of the nodes 40 in such embodiments.

As mentioned above, the second material of the nodes 40 may differ from the first material of the interior volume 14 in radiographic properties. For example, in some embodiments, the first material and the second material may differ in radiodensity or radiopacity. One skilled in the art will recognize that radiopacity is influenced primarily by the density and atomic number of a material. Thus, the first material and the second material may differ in their density and/or atomic number in order to provide nodes 40 with a radiopacity that is distinct from that of interior volume 14.

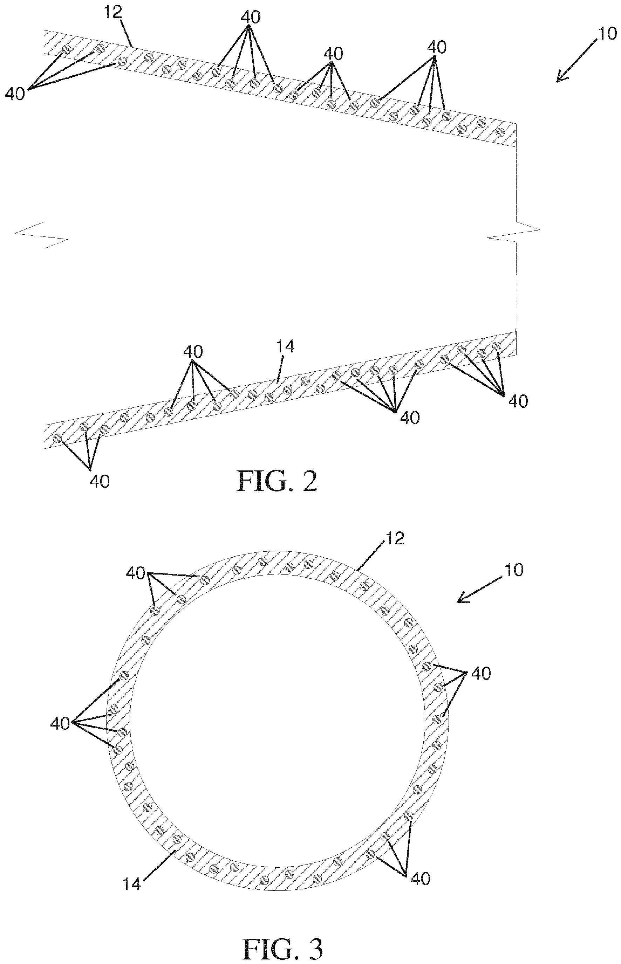

As may be seen in, e.g., FIGS. 2 and 3, component 10 may in some embodiments be a hollow component, such as a nozzle, transition piece, or duct. In the particular example illustrated by FIGS. 2 and 3, component 10 is tapered with straight walls forming a generally conical or frustoconical shape. As illustrated in FIGS. 2 and 3, in some embodiments, the second material of the nodes 40 may be a solid material of differing radiopacity, either greater or lesser, than that of the first material of the interior volume 14. As illustrated in FIGS. 2 and 3, in some embodiments, the nodes 40 may be regularly shaped, e.g., spherical.

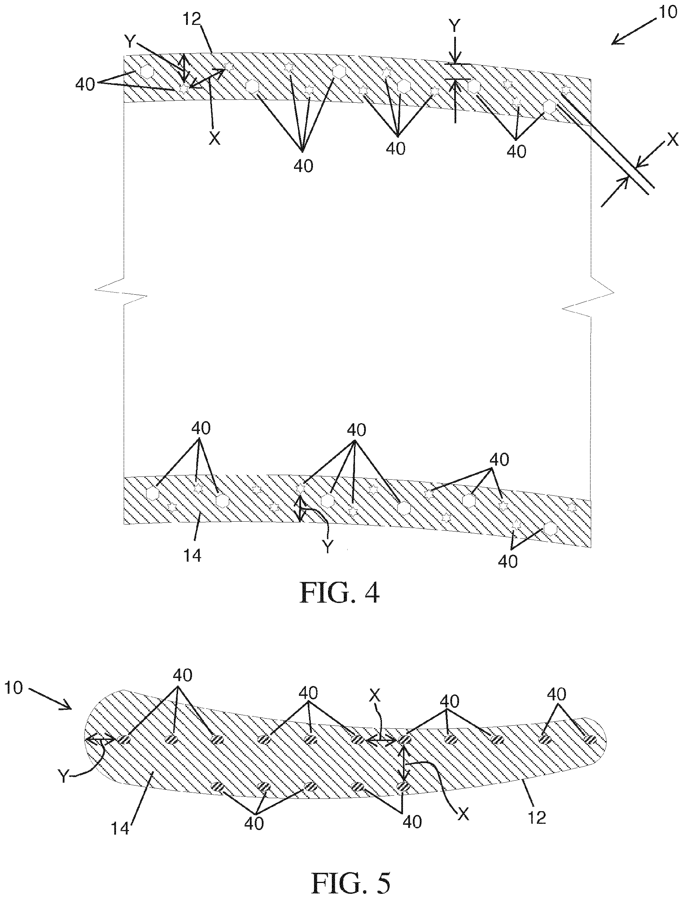

As may be seen in, e.g., FIG. 4, component 10 may in some embodiments be a hollow component, such as a nozzle, transition piece, or duct. In the particular example illustrated by FIG. 4, component 10 is configured with curved walls, e.g., as in a transition piece which may be provided between a combustor and a nozzle. In some embodiments, the second material of the nodes 40 may be a material having lesser radiopacity than the first material of the interior volume 14, e.g., as illustrated in FIG. 4, the nodes 40 may be voids in the interior volume 14. As illustrated in FIG. 4, in some embodiments, the nodes 40 may be of various differing shapes, which can include regular or irregular shapes.

As may be seen in, e.g., FIG. 5, component 10 may in some embodiments be a solid component, such as an airfoil, rotor vane, or stationary vane. In the particular example illustrated by FIG. 5, exterior surface 12 of component 10 is predominantly curved, although it is equally possible to provide a component with a straight line exterior, or some combination of straight and curved. It is to be understood that any form or profile of exterior surface 12 may be used, and in certain embodiments the shape of the exterior surface 12 may influence the configuration of the nodes 40 and the three-dimensional array defined thereby, e.g., as illustrated in FIG. 5, fewer nodes 40 are provided in the more sharply curved portions of component 10 in order to maintain a minimum value for distance Y between outer surface 12 and nodes 40. As illustrated in FIG. 5, in some embodiments, the nodes 40 may have oblong or elliptical cross-section. It is also possible within the scope of the disclosure that the nodes 40 may be elongated (e.g., extending in the direction perpendicular to the view illustrated in FIG. 5). Such elongate members may be, e.g., reinforcing fibers which may have the second material of nodes 40 implanted therein.

The various embodiments disclosed herein may be combined such that features illustrated or described as part of one embodiment can be used with another embodiment to yield a still further embodiment. For example, the component 10 of FIG. 5 may also or instead have nodes 40 which are voids (as illustrated in FIG. 4), and the nodes 40 arranged to define a regularly-spaced array of FIG. 5 may be provided in components 10 such as illustrated in any of the other FIGS. 2 through 4, and/or the component 10 of FIG. 5 may have nodes 40 arrayed in a different pattern, such as a hexagonal grid rather than a rectangular grid, or various other patterns which may be regular, arbitrary with minimum constraints, or random. The foregoing examples are for illustration only and without limitation, numerous other combinations of features will be apparent to one of ordinary skill in the art and all such variations are considered within the scope of the present disclosure.

In some embodiments, when the three-dimensional array is sufficiently large, a portion of the three-dimensional array defined by the nodes 40 can be dedicated to serialization, i.e., binary encoding of data in a serialization area. For example, if the array is defined by a ten-by-ten-by-ten grid of nodes 40, then the middle five-by-five-by-five area can be dedicated for serialization and the rest for strain measurement. In such embodiments, the presence of a node in the serialization area can equate to binary number 1 while the absence of a node in the serialization area can equate to binary number 0. Thus, many different data such as a component number, sensor number, sensor location and so forth can be coded in binary form and implanted in the three-dimensional array defined by the nodes 40.

Suitable materials for component 10 (and more specifically the first material of the interior volume 14 of the overall component 10) can include nickel or cobalt based superalloys, e.g., in high-temperature applications. Additional materials which can be employed include stainless steel or ceramic matric composite ("CMC"). A CMC generally comprises a ceramic matrix with ceramic reinforcing fibers embedded therein. In some embodiments wherein the component 10 is a CMC, the first material of the interior volume 14 may comprise the ceramic matrix and the second material of the nodes 40 can be implanted in the fibers before infiltration of the matrix material. Still further materials are possible as well.

In some embodiments when the first material of the interior volume 14 is stainless steel, the second material of the nodes 40 can also be a stainless steel having a differing radiopacity. For example, a stainless steel alloy comprising Cobalt, Chromium, and Molybdenum (CoCrMo steel) having a density of about 0.298 pounds per cubic inch can be used as the first material of the interior volume 14 of the component 10. Further in such embodiments, the second material of nodes 40 may be class 304 stainless steel having a density of about 0.285 pounds per cubic inch.

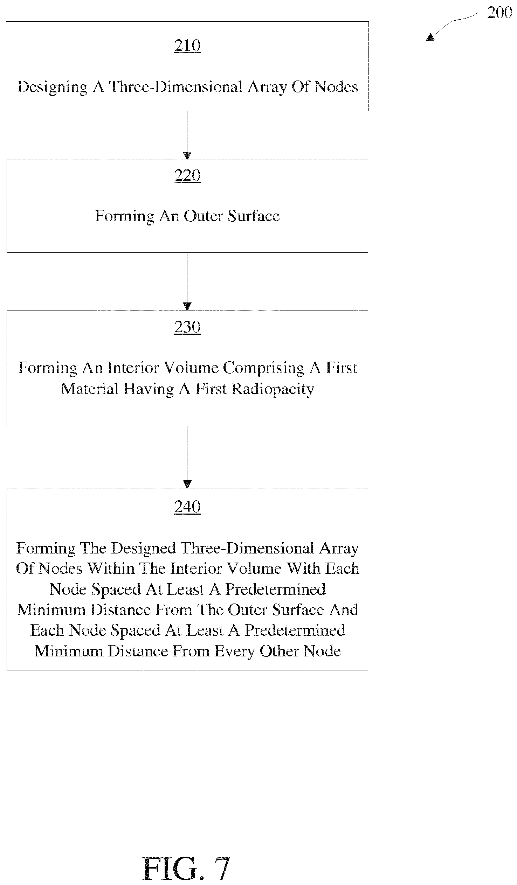

As illustrated in FIG. 7, in some embodiments, a method 200 of making a component 10 comprises a designing step 210 of designing a three-dimensional array of nodes 40, a forming step 220 of forming an outer surface, a forming step 230 of forming an interior volume predominantly of a first material 14 having a first radiopacity, and a forming step 240 of forming the designed three-dimensional array of nodes 40 within the interior volume with each node 40 spaced at least a predetermined minimum distance from the outer surface 12 and each node 40 spaced at least a predetermined minimum distance from every other node 40, wherein the nodes 40 comprise a second material having a second radiopacity and the second radiopacity is not equal to the first radiopacity.

Nodes 40 in accordance with the present disclosure may be incorporated into component 10 using any suitable techniques, including direct metal laser melting (DMLM); other suitable additive manufacturing techniques; or identifying pre-existing internal characteristics (e.g., naturally-occurring voids) of the component 10 that can function as the nodes 40. For example, the nodes 40 can be microstructural features of the material. These features can be non-metallic inclusions or voids, large precipitates in metallic materials, nodular graphite particles in cast irons, non-metallic or metallic features in composite materials, and other microstructural features. Additionally, component 10 can be manufactured by casting such that nodes 40 can be embedded beneath exterior surface 12 by introducing nodes 40 into the mold before the interior volume 14 has solidified, in which case nodes 40 can become fixed in position within the interior volume 14 once solidification is complete.

Component 10 can be made by additive manufacturing, e.g., DMLM, and nodes 40 can be formed by manipulating the manufacturing process. For example, the laser can be configured to provide lack of fusion in the base powder material, either randomly or in selected locations, to form an array of nodes 40 that comprise voids, e.g., as in the example illustrated in FIG. 4. Additionally, a combination of voids and other node materials may be used.

As another example using additive manufacturing, the first material of the interior volume 14 (which can be, e.g., CoCrMo steel) may predominate the powder bed with between about 0.001% and about 10% by weight of the second material of the nodes 40 (which can be, e.g., class 304 steel) added in. In such embodiments, the second material of the nodes 40 can be specifically placed in designated locations, e.g., by a robotic arm. Thus, it is possible to predesign the location of the nodes 40 and provide a predetermined initial configuration for the three-dimensional array defined thereby.

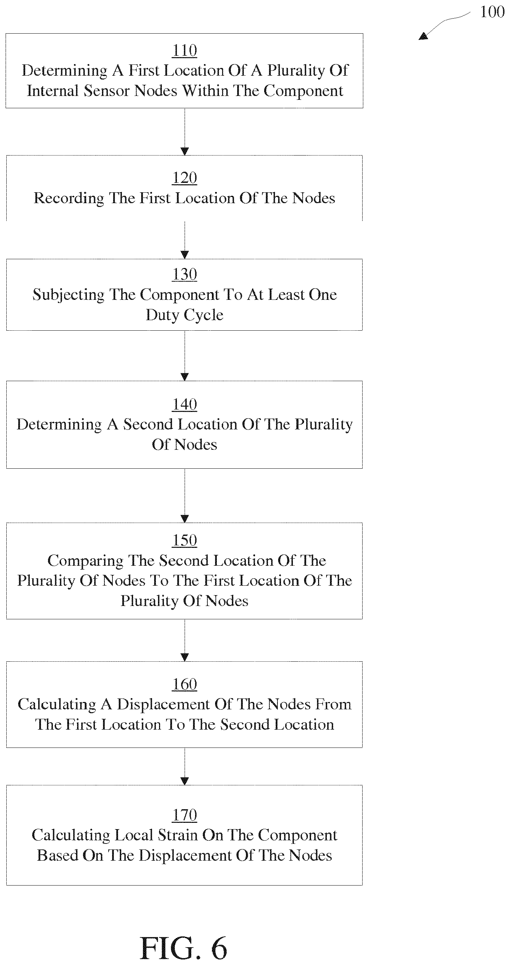

As illustrated in FIG. 6, in some embodiments, a method 100 of monitoring strain in a component, comprises a determining step 110 of determining a first location of a plurality of internal nodes 40 within the component 10, a recording step 120 of recording the first location of the nodes 40, a subjecting step 130 of subjecting the component 10 to at least one duty cycle, a determining step 140 of determining a second location of the plurality of nodes 40 without removing the component 10 from service, a comparing step 150 of comparing the second location of the plurality of nodes 40 to the first location of the plurality of nodes 40, a calculating step 160 of calculating a displacement of the nodes 40 from the first location to the second location, and a calculating step 170 of calculating local strain on the component 10 based on the displacement of the nodes 40.

Various scanning techniques, including radiography such as x-ray or computerized tomography (CT) scans may be used to discern the initial configuration of the three-dimensional array within component 10 formed by nodes 40. The initial configuration can include the relative distances X between one node 40 and the next most proximate node 40 in each direction, and/or the relative distances Y from the exterior surface 12 for each node or for those nodes 40 which comprise the exterior of the array, i.e., those nodes 40 which are relatively closer to the exterior surface 12 than other nodes 40. In embodiments wherein the initial configuration of the node array is predetermined, e.g., when a regular grid is designed and specifically implemented, the designed configuration may be used as the initial configuration, or the finished component 10 may be scanned to determine the initial configuration as well as for quality control of the manufacturing process. Once determined, the initial configuration may then be stored or recorded, e.g., in a computer memory, and the component 10 placed in service. It should be noted that because component 10 is to be placed in service, the array of nodes 40 may be designed so that the mechanical properties, e.g., fracture mechanics, of the component 10 are not altered in a way that would cause a deleterious effect on the serviceability of component 10. In other words, the array of nodes may be designed taking into account the fracture mechanics of the first material of the interior volume 14 so that no known mechanical defect is created as a result of the nodes 40. As noted above, in order to avoid creating a known mechanical defect, a minimum value for the distances X between nodes 40 can be selected based on the fracture mechanics of the first material of the interior volume 14 of the component 10, and in such embodiments distance X between adjacent nodes 40 may be at least the minimum distance value.

As mentioned above, various scanning techniques may be used within the scope of the present subject matter. In some embodiments, CT scanning can be particularly advantageous. For example, when nodes 40 comprise microstructural features, as discussed above, a CT scanner known as micro and nano CT can then be used to extract very fine information regarding such microstructural distributed sensor nodes. As a result, much more accurate local strain information may be obtained which can help development of new materials and evaluate materials in micro and nano scale.

Suitable apparatus for scanning the component 10, e.g., while performing the step 110 of determining a first location of a plurality of internal nodes 40 within the component 10 and/or the determining step 140 of determining a second location of the plurality of nodes 40, can be a personal computer, x-ray scanner, or other scanning device which includes a suitable processor. In general, as used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Suitable processors may also include various input/output channels for receiving inputs from and sending control signals to various other components with which the processor is in communication, such as an imaging device, data acquisition device, etc. Such processors may generally perform various steps as discussed herein. Further, it should be understood that a suitable processor may be a single master processor in communication with the other various components of a scanner or scanning system, and/or may include a plurality of individual component processors, i.e. an imaging device processor, a data acquisition device processor, a robotic arm processor, etc. The various individual component processors may be in communication with each other and may further be in communication with a master processor, and these components may collectively be referred to as a processor.

Once component 10 is placed in service, it may be subjected to a variety of environmental conditions, the result of which over time can be strain deformation and creep. Such deformation may be detected by determining a second configuration of the three-dimensional array defined by nodes 40 based on the location of nodes 40 using radiography or other scanning techniques. The second configuration may include, e.g., changes in the relative distances X between nodes 40 and/or changes in the distances Y from exterior surface 12 for at least a portion of the nodes 40. Because the configuration of the three-dimensional array defined by nodes 40 and changes thereto can be determined by scanning, indirect internal strain measurement (e.g., without destructive testing) is provided. By comparing the second configuration of the three-dimensional array defined by nodes 40 to the recorded initial configuration based on the location of nodes 40, displacement of the nodes 40 from their initial locations can be determined. Further, the local strain on the component can be calculated based on the displacement of the nodes 40. Because the array is three-dimensional and the configurations thereof are measured and compared in all directions, the displacement can be measured in three dimensions, which permits full local strain capture, i.e., calculation of all strain components. In particular, the three-dimensional strain can include six independent components, three normal strains and three shear strains, e.g., both normal and shear strains in each of longitudinal, radial, and circumferential directions.

So long as the calculated strain and deformation are within acceptable operating parameters, the component 10 may be kept in service after the strain is calculated. Subsequently, the above steps may be repeated to determine and compare a third configuration, a fourth configuration, and so on. Thus, by iterating the steps of determining a second (or third, fourth, or other subsequent) location of the plurality of nodes, comparing the subsequent location of the plurality of nodes to one or more prior location(s) of the plurality of nodes, calculating a displacement of the nodes, and calculating local and/or global strain on the component based on the displacement of the nodes, strain monitoring may be provided over the useful life of the component.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:
1. A component, the component comprising:
   an outer surface;
   an interior volume, the interior volume comprising a first material having a first radiopacity;
   a plurality of nodes embedded within the interior volume and spaced from the outer surface, the plurality of nodes defining a three-dimensional array, each of the plurality of nodes comprising a second material having a second radiopacity, wherein the second radiopacity is different from the first radiopacity.
2. The component of claim 1, wherein the second radiopacity is less than the first radiopacity.
3. The component of claim 1, wherein the second radiopacity is greater than the first radiopacity.
4. The component of clause 1, wherein the three-dimensional array is predetermined.
5. The component of clause 1, wherein each node is spaced a predetermined distance away from the outer surface of the component.
6. The component of clause 1, wherein each node is spaced at least a predetermined minimum distance away from every other node.
7. The component of clause 1, wherein there is no known mechanical defect in the component.
8. The component of clause 1, wherein the first material comprises a ceramic matrix composite with ceramic fibers embedded therein, the nodes implanted in one or more of the ceramic fibers.
9. The component of clause 1, wherein the first material comprises a first stainless steel and the second material comprises a second stainless steel.
10. The component of clause 9, wherein the first stainless steel is a Cobalt-Chromium-Molybdenum stainless steel, and the second stainless steel is a Chromium-Nickel stainless steel.
11. A method of making a turbine component having an interior volume, the method comprising:
   forming the interior volume using a first material having a first radiopacity; and,
   forming a three-dimensional array of nodes within the interior volume, each node of the three-dimensional array comprising a second material having a second radiopacity;
   wherein the second radiopacity is different from the first radiopacity.
12. The method of clause 11, wherein the turbine component further comprises an outer surface, the method further comprising a step of designing the three-dimensional array of nodes with each node spaced at least a predetermined minimum distance from the outer surface and each node spaced at least a predetermined minimum distance from every other node prior to forming the three-dimensional array of nodes within the interior volume.
13. The method of clause 11, wherein the step of forming the interior volume comprises forming the interior volume by additive manufacturing and the step of forming the three-dimensional array of nodes comprises performing selective omissions from the additive manufacturing of the interior volume
14. The method of clause 11, wherein the step of forming the interior volume comprises forming the interior volume by additive manufacturing and the step of forming the three-dimensional array of nodes comprises performing selective inclusions in the additive manufacturing of the interior volume.
15. The method of clause 11, wherein the step of forming a three-dimensional array of nodes further comprises forming a serialized portion of the three-dimensional array; and the method further comprises encoding data based on the location of each node in the serialized portion of the three-dimensional array.
16. A method of monitoring strain in a component, comprising:
   determining a first location of a plurality of internal nodes within the component based on the radiopacity of the nodes;
   recording the first location of the nodes;
   subjecting the component to at least one duty cycle;
   determining a second location of the plurality of nodes after the at least one duty cycle;
   comparing the second location of the plurality of nodes to the first location of the plurality of nodes;
   calculating a displacement of the nodes from the first location to the second location; and,
   calculating local strain on the component based on the displacement of the nodes.
17. The method of clause 16, wherein the step of determining a first location comprises radiographically scanning the component to locate the nodes.
18. The method of clause 16, wherein the step of determining a first location comprises designing the component to include nodes with a second radiopacity different from a first radiopacity of an interior volume of the component, such that the first location is determined prior to manufacturing the component, and the first location includes each node spaced at least a predetermined minimum distance from an outer surface of the component and each node spaced at least a predetermined minimum distance from every other node.
19. The method of clause 16, wherein the step of calculating a displacement comprises calculating displacement of the nodes from the first location to the second location in three dimensions, and the step of calculating local strain comprises calculating all components of local strain.
20. The method of clause 16, wherein the step of determining a second location of the plurality of nodes is performed without removing the component from service.

## Claims

1. A component (10), the component (10) comprising:
an outer surface (12);
an interior volume (14), the interior volume (14) comprising a first material having a first radiopacity;
a plurality of nodes (40) embedded within the interior volume (14) and spaced from the outer surface (12), the plurality of nodes (40) defining a three-dimensional array, each of the plurality of nodes (40) comprising a second material having a second radiopacity, wherein the second radiopacity is different from the first radiopacity.

2. The component (10) of claim 1, wherein the second radiopacity is less than the first radiopacity.

3. The component (10) of claim 1, wherein the second radiopacity is greater than the first radiopacity.

4. The component (10) of claim 1, wherein the three-dimensional array is predetermined.

5. The component (10) of claim 1, wherein each node (40) is spaced a predetermined distance (Y) away from the outer surface (12) of the component (10).

6. The component (10) of claim 1, wherein each node (40) is spaced at least a predetermined minimum distance (X) away from every other node (40).

7. The component (10) of claim 1, wherein there is no known mechanical defect in the component (10).

8. The component (10) of claim 1, wherein the first material comprises a ceramic matrix composite with ceramic fibers embedded therein, the nodes (40) implanted in one or more of the ceramic fibers.

9. The component (10) of claim 1, wherein the first material comprises a first stainless steel and the second material comprises a second stainless steel.

10. The component (10) of claim 9, wherein the first stainless steel is a Cobalt-Chromium-Molybdenum stainless steel, and the second stainless steel is a Chromium-Nickel stainless steel.

11. A method (100) of monitoring strain in a component (10), comprising:
determining (110) a first location of a plurality of internal nodes (40) within the component (10) based on the radiopacity of the nodes (40);
recording (120) the first location of the nodes (40);
subjecting (130) the component (10) to at least one duty cycle;
determining (140) a second location of the plurality of nodes (40) after the at least one duty cycle;
comparing (150) the second location of the plurality of nodes (40) to the first location of the plurality of nodes (40);
calculating (160) a displacement of the nodes (40) from the first location to the second location; and,
calculating (170) local strain on the component (10) based on the displacement of the nodes (40).

12. The method of claim 11, wherein the step (110) of determining a first location comprises radiographically scanning the component (10) to locate the nodes (40).

13. The method of claim 11, wherein the step (110) of determining a first location comprises designing the component (10) to include nodes (40) with a second radiopacity different from a first radiopacity of an interior volume (14) of the component (10), such that the first location is determined prior to manufacturing the component (10), and the first location includes each node (40) spaced at least a predetermined minimum distance (Y) from an outer surface (12) of the component (10) and each node (40) spaced at least a predetermined minimum distance (X) from every other node (40).

14. The method of claim 11, wherein the step (160) of calculating a displacement comprises calculating displacement of the nodes (40) from the first location to the second location in three dimensions, and the step (170) of calculating local strain comprises calculating all components of local strain.

15. The method of claim 11, wherein the step (140) of determining a second location of the plurality of nodes (40) is performed without removing the component (10) from service.
